Europäisches Patentamt

(19) European Patent Office

Office européen des brevets

(11) Numéro de publication: **0 039 631
B1**

(12) **FASCICULE DE BREVET EUROPEEN**

(45) Date de publication du fascicule du brevet:
**30.05.84**

(21) Numéro de dépôt: **81400649.0**

(22) Date de dépôt: **24.04.81**

(51) Int. Cl.³: **A 47 J 37/04,** A 47 J 37/06

(54) **Appareil de cuisson portatif.**

(30) Priorité: **30.04.80 FR 8009750**
**15.10.80 FR 8022007**

(43) Date de publication de la demande:
**11.11.81 Bulletin 81/45**

(45) Mention de la délivrance du brevet:
**30.05.84 Bulletin 84/22**

(84) Etats contractants désignés:
**AT BE CH DE FR GB IT LI LU NL SE**

(56) Documents cités:
**CH - A - 307 580**
**CH - A - 609 854**
**DE - A - 2 116 731**
**DE - A - 2 557 058**
**FR - A - 775 778**
**FR - A - 1 093 890**
**FR - A - 1 144 578**
**FR - A - 1 420 599**
**FR - A - 1 555 304**
**FR - A - 1 579 023**
**FR - A - 2 010 111**
**FR - A - 2 183 287**
**FR - A - 2 276 799**
**US - A - 2 758 589**
**US - A - 3 154 005**
**US - A - 3 225 682**
**US - A - 3 393 630**

(73) Titulaire: **SEB S.A., F-21260 Selongey (FR)**

(72) Inventeur: **Berard, Jean-Claude, Le Pouey,
F-42400 Saint-Chamond (FR)**
Inventeur: **Andre, Jean-Claude, 14 Avenue
Champ-Fleuri, F-74600 Seynod (FR)**

(74) Mandataire: **Bouju, André, 38 Avenue de la Grande
Armée, F-75017 Paris (FR)**

ACTORUM AG

## Description

La présente invention concerne un appareil de cuisson portatif, multifonctionel, pouvant être disposé par exemple sur une table de repas.

Cet appareil comporte des résistances électriques tubulaires de chauffage, également désignées sous le nom de résistances blindées. Il comporte en outre des brochettes et un plateau de collecte du jus de cuisson.

On connaît déjà des appareils de ce type. Ces appareils ne sont généralement pas transportables, de sorte qu'ils ne sont pas destinés à être placés sur une table où le repas doit être pris.

On connaît par ailleurs des appareils de cuisson portatifs qui peuvent être placés sur une table, afin que les convives puissent eux-mêmes participer à la confection des repas, ce qui est particulièrement attrayant.

L'un de ces types d'appareil comporte une résistance électrique tubulaire centrale et verticale, et des brochettes placées également verticalement autour de cette résistance centrale. Au bas de l'appareil est placé un plateau de collecte du jus de cuisson.

Pour obtenir une bonne régularité de la cuisson des brochettes, ces dernières sont entraînées en rotation, ce qui complique la construction et le coût de l'appareil.

Par ailleurs, cet appareil présente l'inconvénient de dégager beaucoup de fumée et d'entraîner des projections de graisse, ce qui ne le rend pas très commode lorsqu'il est placé sur une table de repas.

Le brevet FR-A No 1579023 décrit un grilloir dans lequel les brochettes sont situées à une grande distance sous les résistances, de sorte qu'on est obligé de tourner les brochettes pour obtenir une cuisson régulière. De plus, le plateau inférieur de collecte du jus de cuisson se trouve par endroits très rapproché des brochettes, ce qui favorise l'émission des fumées.

Le brevet FR-A No 1144578 décrit un appareil de cuisson dans lequel les brochettes sont disposées au-dessus des résistances, de sorte que le jus de cuisson en tombant sur les résistances produit une fumée abondante et désagréable.

Le brevet DE-A No 2116731 décrit un appareil de cuisson électrique d'intérieur ou de camping dans lequel les brochettes sont disposées sensiblement à mi-distance entre les résistances supérieures et le plateau inférieur. Dans ces conditions, il est nécessaire d'utiliser une importante puissance de chauffage et de tourner les brochettes pour obtenir une cuisson régulière. De plus, la distance comprise entre les brochettes et le plateau inférieur est insuffisante pour obtenir un refroidissement suffisant des gouttes de jus de cuisson, et éviter ainsi l'émission de fumée.

Le but de la présente invention est de remédier aux inconvénients des réalisations précitées en créant un appareil de cuisson de construction simple, pouvant être posé sur une table de salle à manger, permettant aux convives de suivre la cuisson de leur repas sans être incommodés par les odeurs de cuisson, et surtout par les fumées résultant d'une carbonisation du jus de cuisson au contact des résistances ou d'une paroi trop chaude de l'appareil.

L'appareil de cuisson portatif visé par l'invention présente un cadre supérieur porté par deux parois latérales, un plateau de collecte du jus de cuisson placé en dessous de ce cadre, et des résistances électriques tubulaires fixées parallèlement les unes par rapport aux autres sur deux bords opposés de ce cadre, des brochettes pouvant être disposées à proximité desdites résistances tubulaires.

Suivant l'invention, cet appareil est caractérisé par la combinaison des trois caractéristiques suivantes:

a) les brochettes sont fixées enre les résistances tubulaires, sensiblement dans le même plan que ces dernières;

b) un couvercle en verre résistant à la chaleur, destiné à être placé sur le cadre au-dessus des résistances et des brochettes;

c) la distance entre les brochettes et le plateau de collecte est suffisante pour permettre un refroidissement des gouttes de jus de cuisson lors de leur chute, de façon à éviter toute émission de fumée.

Le fait que chaque brochette est comprise entre deux résistances tubulaires permet d'obtenir une cuisson régulière des aliments portés par les brochettes, sans qu'il soit nécessaire d'entraîner ces dernières en rotation par un moteur, tout en évitant que le jus de cuisson ne tombe sur les résistances et, par suite, l'émission d'une fumée abondante.

Par ailleurs, le couvercle en verre permet aux convives de suivre la cuisson sans être gênés par les projections de graisse. De plus, ce couvercle concentre la chaleur vers les aliments et limite considérablement les déperditions de chaleur vers l'extérieur.

D'autre part, l'existence d'une distance suffisante entre les brochettes et le plateau de collecte du jus de cuisson permet d'éviter toute émission de fumée de l'appareil.

D'autres particularités et avantages de l'invention apparaîtront encore dans la description ci-après.

Aux dessins annexés donnés à titre d'exemples non limitatifs:

la fig. 1 est une vue en perspective de l'appareil conforme à l'invention en position pour la cuisson de brochettes;

la fig. 2 est une vue en plan du dessus de l'appareil, son couvercle étant enlevé;

la fig. 3 est une vue à grande échelle d'une partie d'un bord du cadre de l'appareil montrant la fixation d'une brochette;

la fig. 4 est une vue d'une brochette;

la fig. 5 est une vue en coupe, suivant le plan V-V de la fig. 2, montrant la fixation d'une brochette;

la fig. 6 est une vue en élévation de l'appareil, en position pour la cuisson de la raclette;

la fig. 7 est une vue en perspective d'une coupelle à raclette;

la fig. 8 est une vue analogue à la fig. 1, l'appareil portant à la place de son couvercle en verre un plateau de cuisson;

la fig. 9 est une vue en perspective d'une variante de l'appareil de cuisson;

la fig. 10 est une vue en coupe, suivant le plan X-X de la fig. 9, limitée à la partie supérieure de cet appareil, et

la fig. 11 est une vue en coupe transversale, avec arrachements, d'un appareil de cuisson comportant un plateau de collecte du jus de cuisson amélioré.

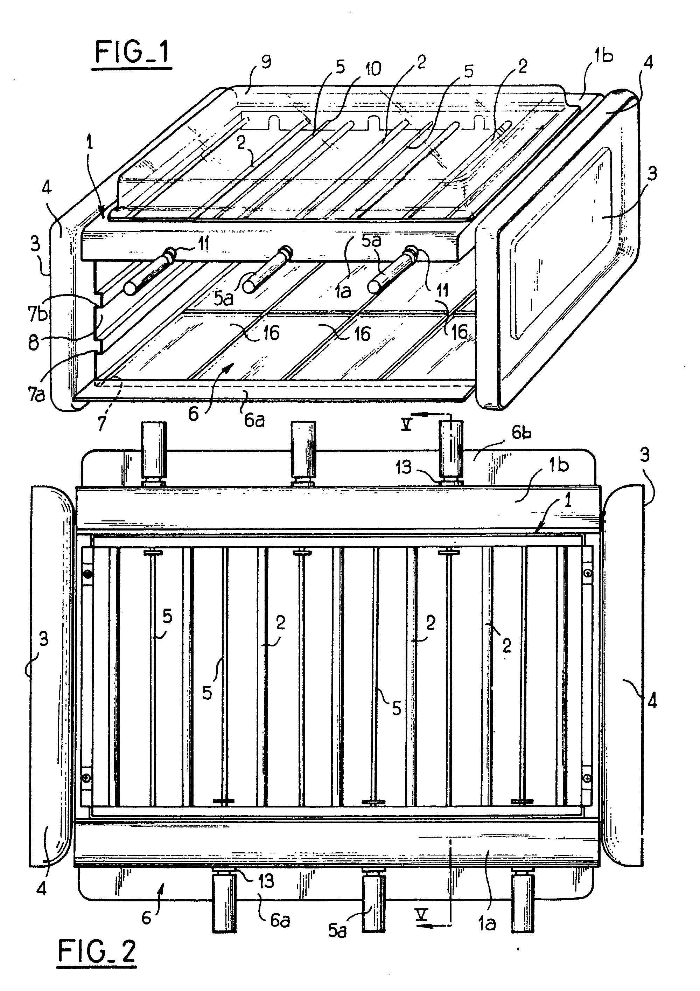

Dans la réalisation des fig. 1 et 2, l'appareil de cuisson conforme à l'invention présente une forme générale parallélépipédique. Il comporte un cadre supérieur 1 portant des résistances électriques 2 tubulaires et parallèles, ce cadre 1 étant bordé par des parois latérales 3 qui présentent un rebord périphérique 4 dirigé vers l'extérieur et permettant la préhension de l'appareil. Ce cadre 1 est réalisé de préférence en une matière thermiquement isolante, pour éviter à l'utilisateur tout risque de brûlure. Entre chaque résistance tubulaire 2 est disposée une brochette 5. Ces brochettes 5 et les résistances 2 sont situées sensiblement dans le même plan. La distance entre les résistances 2 est déterminée en fonction de l'encombrement des aliments supportés par les brochettes 5.

Sous le cadre 1, à environ 120 mm des résistances 2, est placé un plateau 6 de collecte du jus de cuisson. Ce plateau 6 est porté par des glissières 7 ménagées sur les faces internes 8 des parois latérales 3. D'autres glissières 7a, 7b permettent de régler la hauteur du plateau 6.

Sur la fig. 1, le cadre 1 est recouvert par un couvercle 9 en verre supportant la chaleur, tel que le verre Pyrex. La face interne de ce couvercle en verre 9 est avantageusement recouverte par un revêtement en méthylphénylpolysiloxanne, pour faciliter le nettoyage de ce couvercle après utilisation de l'appareil.

On voit d'autre part, sur la fig. 1, que les faces latérales opposées adjacentes aux parois latérales 3 sont totalement ouvertes et que le plateau 6 présente des bords opposés 6a qui font saillie à l'extérieur des faces latérales ouvertes précitées.

De plus, dans la réalisation représentée, les bords opposés 1a et 1b portent deux séries de trois brochettes 5 parallèles, les poignées 5a de l'une des séries de brochettes étant adjacentes au bord 1a du cadre 1, et les poignées 5a de l'autre série de brochettes étant adjacentes au bord opposé 1b.

Ces deux séries de brochettes 5 sont ainsi disposées en quinconce l'une par rapport à l'autre.

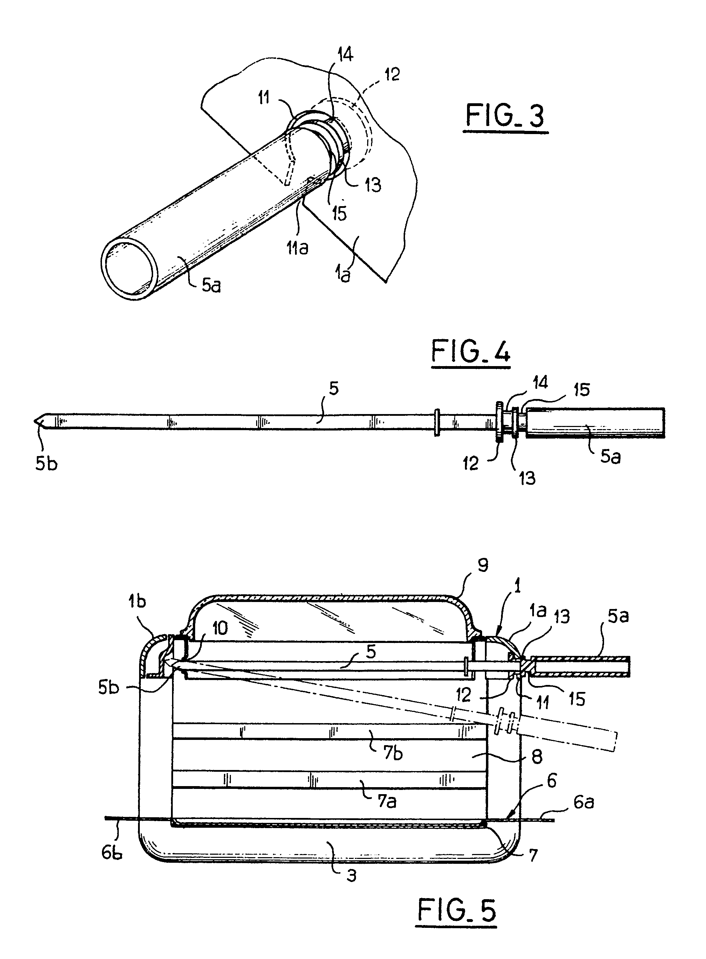

On voit sur les fig. 1, 3 et 5 que les brochettes 5 sont fixées par le dessous du cadre 1. Chaque brochette 5 est fixée au cadre 1 par un orifice 10 (voir fig. 5) ménagé dans le bord 1b du cadre 1, orifice dans lequel pénètre la pointe 5b, et par une encoche 11 (voir fig. 3) en forme de trou de serrure, ouverte vers le bas, ménagée sur l'autre bord 1a du cadre 1, dans laquelle est fixée de façon amovible la poignée 5a de la brochette 5.

Chaque brochette 5 comporte au voisinage de la poignée 5a deux collerettes 12, 13, l'une, 12, présentant un diamètre supérieur à celùi de l'encoche 11 et l'autre, 13, un diamètre inférieur à cette dernière. Ces deux collerettes 12, 13 sont séparées par une partie cylindrique 14, de diamètre supérieur à l'ouverture 11a de l'encoche 11, et la poignée 5a est raccordée à la collerette 13 de plus faible diamètre par une partie 15 présentant un diamètre inférieur à l'ouverture 11a de l'encoche 11.

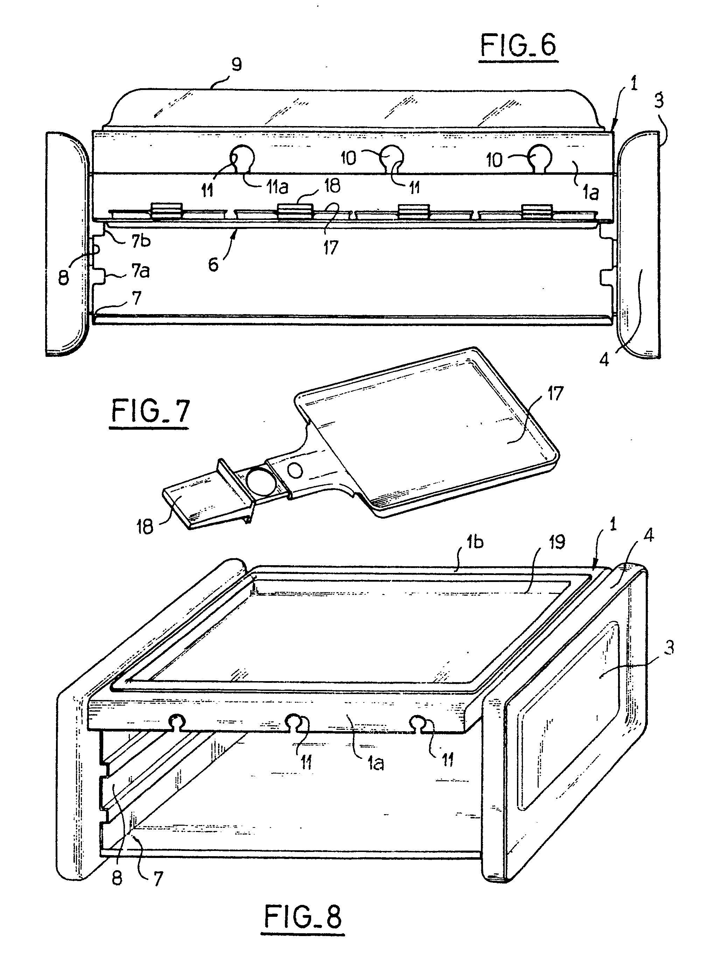

On voit par ailleurs sur la fig. 1 que le plateau 6 de collecte du jus de cuisson comporte des alvéoles 16 délimitant des emplacements pour recevoir des coupelles 17 pour préparer la raclette, comme indiqué sur la fig. 6. Dans cette position, le plateau 6 est rapproché du cadre supérieur 1. Ces coupelles 17, lorsqu'elles sont mises en place sur le plateau 6, présentent des poignées 18 qui font saillie à l'extérieur de l'appareil par ses faces latérales ouvertes.

Sur la fig. 8, l'appareil porte sur son cadre 1 un plateau de cuisson 19 à l'emplacement prévu normalement pour le couvercle en verre 9. Ce plateau 19 permet de réaliser la cuisson de petits morceaux de viande ou d'autres aliments.

On va maintenant décrire les différentes utilisations de l'appareil conforme à l'invention.

Pour préparer des brochettes, on place le plateau 6 à la partie basse 7 de l'appareil, comme indiqué sur la fig. 1, et on met les brochettes 5 en place sous le cadre 1. A cet effet, on engage chaque brochette 5 dans l'une des faces latérales ouvertes, en introduisant la pointe 5b dans l'orifice 10 ménagé sur le bord 1b du cadre 1 (voir fig. 5), puis en verrouilllant la poignée 5a de la brochette 5 dans l'encoche en forme de trou de serrure 11 ménagée dans l'autre bord 1a du cadre 1. Ce verrouillage est réalisé en introduisant la partie 15 de la poignée 5a dans l'ouverture 11a de l'encoche 11, puis en tirant sur la poignée 5a pour que la partie cylindrique 14 s'engage dans l'encoche 11 et reste retenue par cette dernière.

Avant ou après la mise en place des brochettes 5 sous le cadre 1, on place le couvercle en verre 9 sur ce cadre 1.

Lors du fonctionnement de l'appareil, les convives peuvent suivre la cuisson au travers du couvercle 9. Le jus de cuisson tombe sur le plateau 6. Celui-ci reste à une température inférieure à 90°C, grâce à la distance suffisante qui sépare le plateau 6 des résistances 2 et à l'aération assurée par les faces latérales ouvertes de l'appareil, ce qui permet un refroidissement des gouttes de jus de cuisson lors de leur chute, de façon à éviter toute émission de fumée hors de l'appareil. D'autre part, les parties débordantes 6a du plateau 6 protègent la surface de la table à l'égard du rayonnement thermique des résistances 2.

En fin de cuisson, les brochettes 5 sont enlevées de l'appareil en procédant comme suit. On pousse sur la poignée 5a de façon que la collerette 13 de cette dernière et la partie amincie 15 de cette poignée s'engagent dans l'encoche 11. On peut alors dégager la brochette 5 par le dessous du cadre 1, au travers de la face ouverte correspondante de l'appareil.

Pour préparer la raclette, le plateau 6 est placé sur les glissières supérieures 7b, comme indiqué sur la fig. 6. On place ensuite dans chacun des alvéoles 16 du plateau 6 une coupelle 17 contenant du fromage.

Ce plateau 6, dans l'une des positions définies par les glissières 7, 7a, 7b, peut également servir au réchauffage des plats cuisinés.

Pour faire griller de petits morceaux de viande ou pour préparer toute autre grillade, des œufs sur le plat ou une omelette, on remplace le couvercle en verre par un plateau de cuisson 19. Dans cette position, le plateau 19 est chauffé par-dessous par les résistances électriques 2.

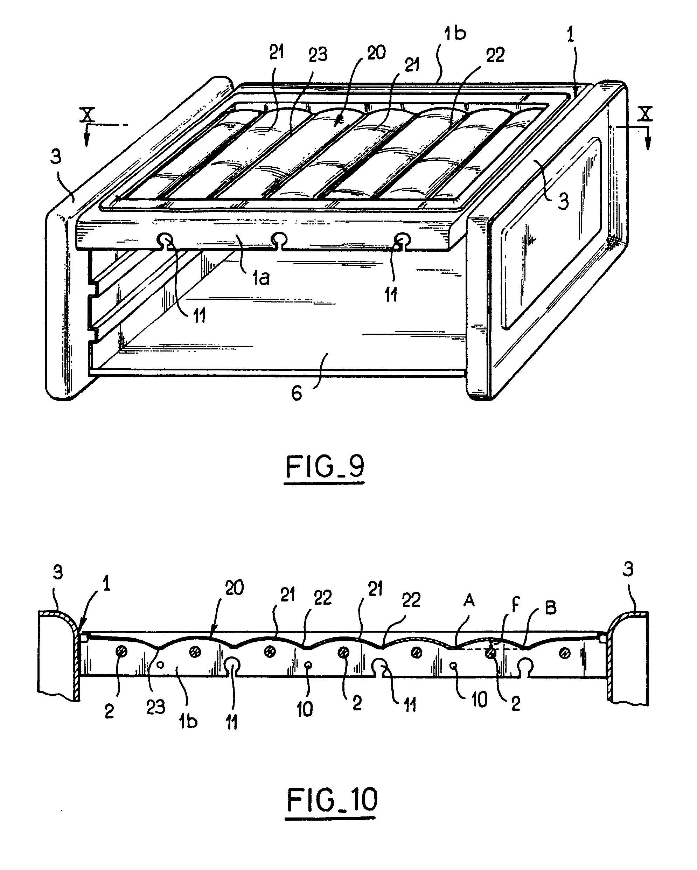

Dans la réalisation selon les fig. 9 et 10, le cadre 1 porte un plateau de cuisson 20 présentant des ondulations 21 parallèles qui s'étendent dans la direction des résistances 2. Les fonds 22 de ces ondulations sont situés (voir fig. 10) sensiblement à égale distance de deux résistances voisines et comportent chacun une fente 23 pour permettre l'écoulement du jus de cuisson. Ces fentes 23 s'étendent sensiblement sur toute la largeur du plateau 20.

Dans l'exemple représenté, la section transversale des ondulations 21 est constituée par la juxtaposition d'arcs de cercle AB dont la convexité est dirigée vers l'extérieur. Ces arcs de cercle AB sont séparés par les fentes 23. La hauteur des ondulations 21 ou la flèche f des arcs AB est sensiblement égale au diamètre des résistances tubulaires 2.

Il est avantageux de revêtir ce plateau 20 par un revêtement antiadhésif tel que le polytétrafluoréthylène, pour éviter l'adhérence des morceaux de viande.

Lors de la cuisson, par exemple, d'une grillade sur le plateau 20, le jus formé se rassemble dans les fonds 22 des ondulations 21 et s'écoule au travers des fentes 23.

Du fait de l'emplacement de ces fentes 23, le jus de cuisson ne risque pas d'être carbonisé par des résistances chauffantes 2. Ainsi, les convives disposés de part et d'autre de l'appareil de cuisson ne risquent pas d'être incommodés par la fumée résultant d'une carbonisation du jus de cuisson.

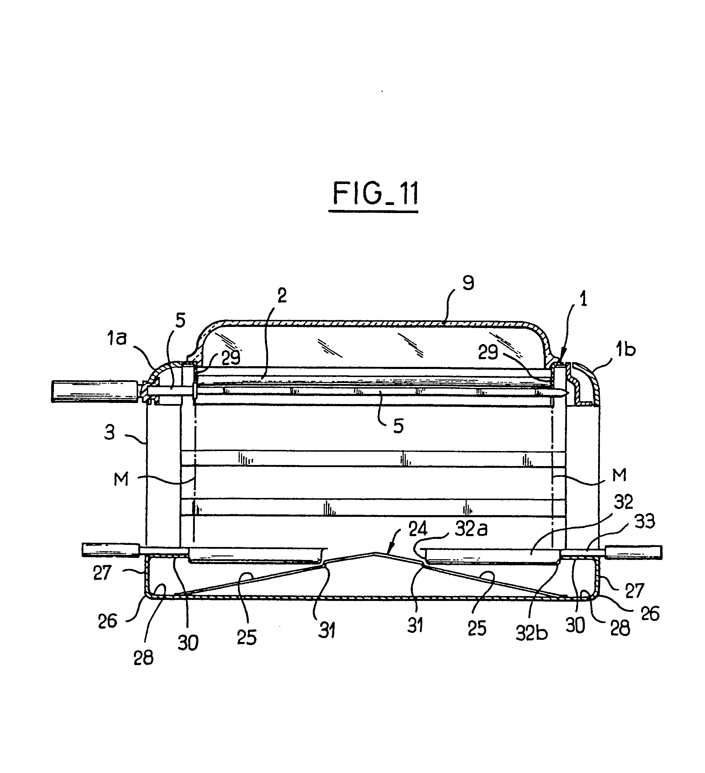

Dans la réalisation de la fig. 11, l'appareil de cuisson est en position de fonctionnement pour la cuisson de brochettes 5, et le plateau de cuisson 20 est remplacé par un couvercle en verre 9.

Le plateau 24 de collecte du jus de cuisson placé à la partie inférieure de l'appareil comporte deux pans 25 inclinés symétriquement vers les deux bords opposés 26, perpendiculaires aux résistances 2 de ce plateau. Chacun de ces bords 26 comporte une bordure sensiblement verticale 27 qui définit avec chacun des pans inclinés 25 une gorge 28 de collecte du jus de cuisson.

Les deux gorges 28 de collecte du jus de cuisson sont situées à l'extérieur de deux plans M passant par les parois opposées 29 auxquelles sont fixées les résistances 2. De plus, dans la réalisation selon la fig. 11, les bordures verticales 27 du plateau 24 sont prolongées par un rebord 30 horizontal qui s'étend vers le plan respectif M, en recouvrant ainsi la gorge 28 correspondante.

Par ailleurs, chaque pan incliné 25 du plateau 24 comporte un épaulement 31 parallèle aux rebords adjacents 30 et situé sensiblement au même niveau que ces derniers.

On voit sur la fig. 11 que cet épaulement 31 est prévu pour recevoir l'extrémité 32a d'une coupelle à raclette 32 dont le manche 33 repose en appui sur le rebord 30, l'extrémité 32b de cette coupelle étant calée contre le rebord 30.

Lorsque l'appareil est en position de cuisson de brochettes, comme indiqué sur la fig. 11, et de même lorsque cet appareil est dans la position des fig. 9 et 10, le jus de cuisson tombe sur les pans inclinés 25 du plateau 24, puis s'écoule vers les bords opposés 26 de ce dernier en se rassemblant dans les gorges 28.

Du fait de l'emplacement de ces gorges à l'extérieur des plans M et grâce aux rebords horizontaux 30 qui recouvrent ces gorges, le jus de cuisson collecté par ces dernières est protégé contre le rayonnement calorifique direct émis par les résistances 2. Par conséquent, ce jus de cuisson ne risque pas d'être porté à une température supérieure à sa température de carbonisation, de sorte qu'on évite toute émission de fumée polluante désagréable pour les convives placés autour de l'appareil de cuisson.

Bien entendu, l'invention n'est pas limitée aux exemples que l'on vient de décrire, et on peut apporter à ces derniers de nombreuses modifications sans sortir du cadre de l'invention.

Ainsi, le profil en arc de cercle des ondulations 21 pourrait être remplacé par tout autre profil ondulé assurant un écoulement du jus vers les fentes 23.

Par ailleurs, ces fentes 23 pourraient être remplacées par une série d'ouvertures.

D'autre part, on peut concevoir d'autres modes de verrouillage ou de fixation des brochettes 5 au cadre supérieur 1.

Le couvercle en verre 9 pourrait également servir en position renversée de plat de cuisson ou de réchauffage de plats.

Par ailleurs, les brochettes 5 pourraient être disposées légèrement au-dessus des résistances 2, tout en étant situées entre ces dernières, de façon à éviter tout risque que du jus de cuisson tombe sur ces résistances.

## Revendications

1. Appareil de cuisson portatif présentant un cadre supérieur (1) porté par deux parois latérales (3), un plateau (6) de collecte du jus de cuisson placé en dessous de ce cadre (1), des résistances électriques tubulaires (2) fixées parallèlement les unes par rapport aux autres sur deux bords opposés (1a, 1b) de ce cadre (1), des brochettes (5) pouvant être disposées à proximité desdites résistances tubulaires (2), caractérisé par la combinaison des trois caractéristiques suivantes:

a) les brochettes (5) sont fixées entre les résistances tubulaires (2), sensiblement dans le même plan que ces dernières;

b) un couvercle (9) en verre résistant à la chaleur, destiné à être placé sur le cadre (1) au-dessus des résistances (2) et des brochettes (5);

c) la distance entre les brochettes (5) et le plateau de collecte (6) est suffisante pour permettre un refroidissement des gouttes de jus de cuisson lors de leur chute, de façon à éviter toute émission de fumée.

2. Appareil conforme à la revendication 1, présentant une forme générale parallélépipédique, les deux faces latérales adjacentes aux deux parois latérales (3) qui supportent le cadre (1) étant ouvertes, caractérisé en ce que les bords opposés (1a, 1b) du cadre (1) comportent des moyens pour fixer une première série de brochettes (5) avec leur poignée (5a) adjacente à l'autre bord (1b) du cadre.

3. Appareil conforme à la revendication 2, caractérisé en ce que la première série de brochettes (5) est disposée en quinconce par rapport à la seconde série de brochettes (5).

4. Appareil conforme à l'une des revendications 2 ou 3, caractérisé en ce que les deux bords opposés (1a, 1b) du cadre (1) comportent des moyens (10, 11) pour fixer les brochettes (5) sous ledit cadre.

5. Appareil conforme à la revendication 4, caractérisé en ce que les moyens de fixation des brochettes (5) comprennent pour chaque brochette (5) un orifice (10), ménagé dans l'un (1b) des bords opposés du cadre (1) destiné à recevoir la pointe (5b) de la brochette, et une encoche (11) en forme de trou de serrure, ouverte vers le bas de l'appareil, ménagée dans l'autre bord (1b) du cadre (1) et destinée à fixer l'autre extrémité (5a) de la brochette.

6. Appareil conforme à la revendication 5, caractérisé en ce que chaque brochette (5) comporte au voisinage de la poignée (5a) deux collerettes (12, 13), l'une (12) présentant un diamètre supérieur à celui de l'encoche (11) et l'autre (13) un diamètre inférieur à cette dernière, ces deux collerettes étant séparées par une partie cylindrique (14) de diamètre supérieur à l'ouverture (11a) de l'encoche (11), et la poignée (5a) étant raccordée à la collerette (13) de plus faible diamètre par une partie (15) présentant un diamètre inférieur à l'ouverture (11) de l'encoche.

7. Appareil conforme à l'une des revendications 1 à 6, caractérisé en ce que le plateau (6) de collecte du jus de cuisson présente des bords opposés (6a, 6b) qui font saillie à l'extérieur des faces latérales ouvertes de l'appareil.

8. Appareil conforme à l'une des revendications 1 à 7, caractérisé en ce que le plateau (6) de collecte du jus de cuisson comporte des alvéoles (16) délimitant des emplacements pour recevoir des coupelles (17) pour préparer la raclette.

9. Appareil conforme à l'une des revendications 1 à 8, caractérisé en ce que le cadre (1) est prévu pour recevoir un plateau de cuisson (19, 20) à l'emplacement normal du couvercle en verre.

10. Appareil conforme à la revendication 9, caractérisé en ce que le plateau (20) présente des ondulations parallèles (21) qui s'étendent dans la direction des résistances électriques de chauffage (2), les fonds (22) de ces ondulations (21) étant situés sensiblement à égale distance de deux résistances (2) voisines, ces fonds (22) comportant des ouvertures (23) pour permettre l'écoulement du jus de cuisson.

11. Appareil conforme à la revendication 10, caractérisé en ce que les ouvertures (23) sont constituées par des fentes s'étendant sensiblement sur toute la largeur du plateau (20).

12. Appareil conforme à l'une des revendications 10 ou 11, caractérisé en ce que la section transversale des ondulations (21) du plateau (20) est constituée par une série d'arcs de cercle (AB) dont la convexité est dirigée vers l'extérieur du plateau.

13. Appareil conforme à l'une des revendications 10 à 12, caractérisé en ce que la hauteur (f) des ondulations (21) est du même ordre de grandeur que le diamètre des résistances (2).

14. Appareil conforme à l'une des revendications 1 à 13, comportant à sa partie inférieure un plateau (24) de collecte du jus de cuisson, caractérisé en ce que le plateau (24) comporte deux pans (25) inclinés symétriquement vers les bords opposés (26) perpendiculaires aux résistances (2) de ce plateau, lesdits bords comportant chacun une bordure (27) sensiblement verticale définissant avec chacun des pans inclinés une gorge (28) de collecte du jus de cuisson.

15. Appareil conforme à la revendication 14, caractérisé en ce que les gorges (28) de collecte du jus de cuisson sont situées à l'extérieur de deux plans (M) perpendiculaires aux résistances (2) et passant par les extrémités opposées de ces dernières.

16. Appareil conforme à la revendication 15, caractérisé en ce que les bordures sensiblement verticales (27) des gorges (28) de collecte du jus de cuisson sont prolongées par un rebord sensiblement horizontal (30) qui s'étend vers le plan (M) respectif en recouvrant ainsi la gorge (28) correspondante.

17. Appareil conforme à l'une des revendications 14 à 16, caractérisé en ce que chaque pan incliné (25) comporte un épaulement (31) parallèle aux rebords (30) du plateau (24) de collecte du jus de cuisson et disposé sensiblement au même niveau que ces rebords, pour recevoir l'extrémité (32a) d'une coupelle à raclette (32), l'autre extrémité (32b) de cette coupelle étant calée contre le rebord (30) du plateau (24).

## Claims

1. A portable cooking appliance having a top frame (1) carried by two side walls (3), a cooking-juice collecting tray (6) placed beneath said frame (1), tubular electric resistors (2) attached to two opposite sides (1a, 1b) of said frame (1) in parallel relation to each other, skewers (5) being disposed near the said tubular resistors (2), characterized in that said appliance has the following three features in combination:

(*a*) the skewers (5) are fixed between the tubular resistors (2), substantially in the same plane than the latters;

(*b*) a heat-resistant glass lid (9) which is intended to be placed on the frame (1) above the resistors (2) and the skewers (5);

(*c*) the distance between the skewers (5) and the collecting tray (6) is sufficient to permit cooling of the cooking-juice drops as they fall into the tray, thereby preventing any emission of smoke.

2. An appliance according to claim 1 and having a generally parallelepipedal shape, the two lateral faces adjacent to the two side walls (3) which support the frame (1) being open, wherein the opposite edges (1a, 1b) of the frame (1) are provided with means for attaching a first series of skewers (5) with their respective handles (5a) adjacent to one of said edges (1a) of the frame, and a second series of skewers (5) with their respective handles (5a) adjacent to the other edge (1b) of said frame.

3. An appliance according to claim 2, wherein the first series of skewers (5) is arranged in staggered relation to the second series of skewers (5).

4. An appliance according to one of claims 2 or 3, wherein the two opposite edges (1a, 1b) of the frame (1) are provided with means (10, 11) for attaching the skewers (5) beneath said frame.

5. An appliance according to claim 4, wherein the means for attaching the skewers (5) comprise in the case of each skewer (5) a hole (10) formed in one (1b) of the opposite edges of the frame (1) for receiving the pointed tip (5b) of the skewer and a keyhole slot (1) formed in the other edge (1b) of the frame (1) so as to have an opening at the bottom of said edge, the function of said keyhole slot being to attach the other end (5a) of said skewer.

6. An appliance according to claim 5, wherein each skewer (5) is provided in the vicinity of the handle (5a) with two annular flanges (12, 13) having in one case (12) a diameter which is larger than that of the keyhole slot (11) and in the other case (13) a diameter which is smaller than that of said slot, said two annular flanges being separated by a cylindrical portion (14) having a larger diameter than the opening (11a) of the keyhole slot (11), the handle (5a) of each skewer being joined to the smaller-diameter flange (13) by a portion (15) having a diameter which is smaller than said slot opening (11a).

7. An appliance according to one of claims 1 to 6, wherein the cooking-juice collecting tray (6) has opposite edges (6a, 6b) which project outwards from the lateral open faces of the appliance.

8. An appliance according to one of claims 1 to 7, wherein the cooking-juice collecting tray (6) is provided with recesses (16) defining compartment locations for receiving small pans (17) in which raclette cheese slices are prepared for cooking.

9. An appliance according to one of claims 1 to 8, wherein the frame (1) is designed to receive a cooking tray (19, 20) in the normal position of the glass lid.

10. An appliance according to claim 9, wherein the cooking tray (20) is provided with parallel wavy corrugations (21) which extend in the direction of the electric heating resistors (2), the troughs (22) of said wavy corrugations (21) being substantially equidistant from two adjacent resistors (2), said troughs (22) being provided with openings (23) in order to permit discharge of the cooking-juice.

11. An appliance according to claim 10, wherein the openings (23) consist of slits extending substantially over the entire width of the cooking tray (20).

12. An appliance according to one of claims 10 or 11, wherein the transverse cross-section of the wavy corrugations (21) of the cooking tray (20) consists of a series of circular arcs (AB), the convex side of each arc being directed towards the exterior of said cooking tray.

13. An appliance according to one of claims 10 to 12, wherein the height (f) of each wavy corrugation (21) is of the same order of magnitude as the diameter of the heating resistors (2).

14. An appliance according to one of claims 1 to 13 and provided with a cooking-juice collecting tray (24) at the bottom portion of said appliance, wherein said collecting tray (24) has two sloping surfaces (25) inclined symmetrically towards the opposite edges (26) located at right angles to the resistors (2) of said collecting tray, said edges being each provided with a substantially vertical side portion (27) which defines with each sloping surface a channel (28) for collecting the cooking-juice.

15. An appliance according to claim 14, wherein the channels (28) for collecting the cooking-juice are located externally of two planes (M) which are perpendicular to the heating resistors (2) and pass through the opposite ends of said resistors.

16. An appliance according to claim 15, wherein the substantially vertical side portions (27) of the cooking-juice collecting channels (28) have a sustantially horizontal flange (30) which extends towards the respective plane (M) and thus covers the corresponding channel (28).

17. An appliance according to one of claims 14 to 16, wherein each sloping surface (25) is provided with a shouldered portion (31) which is parallel to the flanges (30) of the cooking-juice collecting tray (24) and located substantially at the same level as said flanges in order to receive the inner end (32a) of a raclette pan (32), the other or outer end (32b) of said pan being set in position against the flange (30) of the collecting tray (24).

**Patentansprüche**

1. Tragbares Gerät zum Braten, mit einem oberen Rahmen (1), der von zwei Seitenwänden (3) getragen wird, einem Blech (6) zum Auffangen des Bratsaftes unter diesem Rahmen (1) und rohrförmigen elektrischen Widerständen (2), die parallel zueinander an zwei gegenüberliegenden Rändern (1a, 1b) dieses Rahmens (1) befestigt sind, und Spiesse, die in die Nähe der rohrförmigen elektrischen Widerständen liegen, gekennzeichnet durch die Kombination der drei folgenden Merkmale:

a) zwischen den rohrförmigen Widerständen (2) und wesentlich in die gleiche Ebene sind Spiesse (5) gehaltert,

b) ein Deckel (9) aus hitzefestem Glas, der dazu bestimmt ist, auf den Rahmen (1) über den Widerständen (2) und den Spiessen (5) angeordnet zu werden,

c) der Abstand zwischen den Spiessen (5) und dem Auffangblech (6) ist ausreichend, um ein Abkühlen der Bratensafttropfen während ihres Herabfallens zu gestatten, so dass jegliche Rauchemission verhindert wird.

2. Gerät nach Anspruch 1, welches die allgemeine Gestalt eines Quaders hat, wobei die zwei an die zwei Seitenwände (3), welche den Rahmen (1) tragen, angrenzenden Seitenflächen offen sind, dadurch gekennzeichnet, dass die einander gegenüberliegenden Ränder (1a, 1b) des Rahmens (1) Mittel umfassen, um eine erste Reihe von Spiessen (5) mit ihrem Handgriff (5a) an einen der Ränder (1a) des Rahmens und eine zweite Reihe von Spiessen (5) mit ihrem Handgriff (5a) an den anderen Rand (1b) des Rahmens angrenzend zu haltern.

3. Gerät nach Anspruch 2, dadurch gekennzeichnet, dass die erste Reihe von Spiessen (5) in bezug auf die zweite Reihe von Spiessen (5) umgekehrt angeordnet ist.

4. Gerät nach einem der beiden Ansprüche 2 oder 3, dadurch gekennzeichnet, dass die zwei einander gegenüberliegenden Ränder (1a, 1b) des Rahmens (1) Mittel (10, 11) zur Halterung der Spiesse (5) unter dem Rahmen umfassen.

5. Gerät nach Anspruch 4, dadurch gekennzeichnet, dass die Mittel zur Halterung der Spiesse (5) für jeden Spiess (5) eine Öffnung (10) umfassen, die in einem (1b) der einander gegenüberliegenden Ränder des Rahmens (1) angeordnet ist und dazu bestimmt ist, die Spitze (5b) des Spiesses aufzunehmen, und eine schlüssellochförmige Kerbe (11) umfassen, die zur Unterseite des Gerätes hin offen ist und in dem anderen Rand (1b) des Rahmens (1) angeordnet und dazu bestimmt ist, das andere Ende (5a) des Spiesses zu haltern.

6. Gerät nach Anspruch 5, dadurch gekennzeichnet, dass jeder Spiess in der Nähe des Handgriffes (5a) zwei Kragen (12, 13) aufweist, wovon der eine (12) einen grösseren Durchmesser aufweist als die Kerbe (11) und der andere (13) einen geringeren Durchmesser als letztere aufweist, wobei die beiden Kragen durch einen zylindrischen Teil (14) getrennt sind, dessen Durchmesser grösser ist als die Öffnung (11a) der Kerbe (11), und wobei der Handgriff (5a) an den Kragen (13) geringeren Durchmessers über ein Teil (15) anschliesst, das einen geringeren Durchmesser als die Öffnung (11a) der Kerbe aufweist.

7. Gerät nach einem der Ansprüche 1 bis 6, dadurch gekennzeichnet, dass das Blech (6) zum Auffangen des Bratensaftes einander gegenüberliegende Ränder (6a, 6b) aufweist, die an den offenen Seitenflächen des Gerätes nach aussen vorstehen.

8. Gerät nach einem der Ansprüche 1 bis 7, dadurch gekennzeichnet, dass das Blech (6) zum Auffangen des Bratensaftes Zellen (16) aufweist, die Zonen zur Aufnahme der Schalen (17) zur Zubereitung einer Raclette begrenzen.

9. Gerät nach einem der Ansprüche 1 bis 8, dadurch gekennzeichnet, dass der Rahmen (1) zur Aufnahme einer Bratplatte (19, 20) an der normalen Stelle des Glasdeckels ausgebildet ist.

10. Gerät nach Anspruch 9, dadurch gekennzeichnet, dass die Platte (20) parallele Wellungen (21) aufweist, die sich in der Richtung der elektrischen Heizwiderstände (2) erstrecken, wobei die Böden (22) dieser Wellungen (21) im wesentlichen im gleichhen Abstand von zwei benachbarten Widerständen (2) liegen und diese Böden (22) Öffnungen (23) zum Abfliessen des Bratensaftes aufweisen.

11. Gerät nach Anspruch 10, dadurch gekennzeichnet, dass die Öffnungen (23) durch Schlitze gebildet sind, die sich im wesentlichen über die gesamte Breite der Platte (20) erstrecken.

12. Gerät nach einem der beiden Ansprüche 10 oder 11, dadurch gekennzeichnet, dass der Querschnitt der Wellungen (21) der Platte (20) durch eine Reihe von Kreisbögen (AB) gebildet ist, deren konvexe Form der Aussenseite der Platte zugewandt ist.

13. Gerät nach einem der Ansprüche 10 bis 12, dadurch gekennzeichnet, dass die Höhe (f) der Wellungen (21) dieselbe Grössenordnung wie der Durchmesser der Widerstände (2) hat.

14. Gerät nach einem der Ansprüche 1 bis 13, mit einem Blech (24) zum Auffangen des Bratensaftes in seinem unteren Teil, dadurch gekennzeichnet, das das Blech (24) zwei Flächen (25) aufweist, die symmetrisch zu den einander gegenüberliegenden, zu den Widerständen (2) senkrechten Rändern (26) dieses Bleches geneigt sind, wobei diese Ränder jeweils eine im wesentlichen senkrechte Umrandung (27) aufweisen, die mit jeder der geneigten Flächen eine Rille (28) zum Auffangen des Bratensaftes bilden.

15. Gerät nach Anspruch 14, dadurch gekennzeichnet, dass die Rillen (28) zum Auffangen des Bratensaftes auf der Aussenseite von zwei Ebenen (M) liegen, die senkrecht zu den Widerständen (2) sind und durch die einander gegenüberliegenden Enden derselben gehen.

16. Gerät nach Anspruch 15, dadurch gekennzeichnet, dass die im wesentlichen senkrechten Umrandungen (27) der Rillen (28) zum Auffangen des Bratensaftes durch einen im wesentlichen waagerechten Rand (30) verlängert sind, der sich zur entsprechenden Ebene (M) hin erstreckt, wobei er so die entsprechende Rille (28) zudeckt.

17. Gerät nach einem der Ansprüche 14 bis 16, dadurch gekennzeichnet, dass jede geneigte Fläche (25) eine Schulter (31) auweist, die parallel zu den Rändern (30) des Bleches (24) zum Auffangen des Bratensaftes ist und im wesentlichen auf derselben Höhe wie diese Ränder angeordnet ist, um das Ende (32a) einer Racletteschale (32) aufzunehmen, wobei das andere Ende (32b) dieser Schale gegen den Rand (30) des Bleches (24) festgelegt ist.

FIG_1

FIG_2

FIG. 3

FIG. 4

FIG. 5

FIG_6

FIG_7

FIG_8

FIG_9

FIG_10

## FIG_11